# EUROPÄISCHE PATENTANMELDUNG

(11) **EP 0 695 068 A2**
(43) Veröffentlichungstag der Anmeldung: **31.01.1996**
(21) Anmeldenummer: 95111655.7
(22) Anmeldetag: 25.07.1995
(51) Int. Cl.: H04L 29/06

(54) **Testverfahren sowie Konvertereinrichtung, Testeinrichtung und Testprogramm-Modul dafür**

(30) Priorität: 28.07.1994 DE 4426740
(71) Anmelder: Alcatel SEL Aktiengesellschaft, D-70435 Stuttgart (DE)
(72) Erfinder: Willrett, Ursel, D-71254 Ditzingen (DE); Schaupp, Konrad, D-71162 Gäufelden (DE)
(74) Vertreter: Knecht, Ulrich Karl

(57) **Zusammenfassung**

**Stand der Technik:**
Eine Netzkomponente (NETKOMP) ist mit einem Simulator (SIM) verbunden, in den ein in einer Test-Sprache erstellter und in die Sprache des Simulators (SIM) konvertierter Test-Fall geladen und gestartet wird. Die Reaktion der Netzkomponente (NETKOMP) wird in einer wählbaren Darstellungsart vom Simulator (SIM) ausgegeben.

**Technisches Problem:**
Durchführen und Auswerten eines Testes dauert sehr lange.

**Grundgedanke:**
Ein abstraktes Test-Szenarie und der Test-Fall im Simulator (SIM) werden mittels Nachrichtenstruktur-Daten (PROT) und Grundeinstellungs-Daten (BASE) wechselseitig aufeinander abgebildet.

**Lösung:**
Ein Test-Szenario wird über eine graphische Oberfläche (SERV) in punktuell wählbarer Abstraktionshöhe eingegeben, durch Details aus den Grundeinstellungs-Daten (BASE) ergänzt und in einen Test-Fall in der Sprache des Simulators (SIM) konvertiert. Auf Anforderung wird die Rückabbildung ausgelöst.

**Vorteile:**
- Kürzere Test-Zeit.
- Interaktives Testen möglich.
- Test-Fälle können in kürzerer Zeit fehlerfrei gemacht werden.

## Beschreibung

Die Erfindung betrifft ein Verfahren zum Testen mindestens einer ersten Einrichtung nach dem Oberbegriff von Anspruch 1, eine Konvertereinrichtung nach dem Oberbegriff von Anspruch 9, eine Testeinrichtung zum Testen von mindestens einer ersten Einrichtung nach dem Oberbegriff von Anspruch 11 und ein Programm-Modul für eine Konvertereinrichtung zum Testen mindestens einer ersten Einrichtung nach dem Oberbegriff von Anspruch 13.

Vor allem im Bereich der Kommunikationstechnik wird das Testen von neu entwickelten Produkten, beispielsweise Vermittlungsstellen, Mobilfunk-Komponenten (MSC, BS) oder Komponenten für verteilte Vermittlungsverfahren (Router, Brigde), zunehmend schwieriger und komplexer. Dies resultiert daraus, daß der zu testende Nachrichtenaustausch zwischen diesen Komponenten zunehmend komplexeren Kommunikationsprotokollen entspricht, die meist verschiedenen Kommunikationsschichten zugeordnet sind. Hierfür werden sogenannte Protokoll-Tester verwendet.

Die Erfindung geht nun von solch einem Protokoll-Tester aus, wie er beispielsweise aus der produktbeschreibung des Protokoll-Testers K1197 der Firma Siemens AG bekannt ist, die 1993 erschienen und unter der Bestell-Nr. E 86060-T 6052-A 661-A5 erhältlich ist.

Der dort beschriebene Protokoll-Tester wird zum Testen eines Testobjekts, beispielsweise einer Vermittlungsstelle, mit dieser verbunden und simuliert eine oder zwei andere Netzkomponenten, beispielsweise ebenfalls eine Vermittlungsstelle. Gemäß einer Testablauf-Prozedur, auch Test-Fall genannt, sendet sie Nachrichten an die Vermittlungsstelle, empfängt Antwort-Nachrichten von dieser und simuliert so eine bestimmte Kommunikationssituation. Die Testablauf-Prozedur liegt hierbei in Form eines Zustands-Automats vor und wird vom Tester in einer Programmiersprache erstellt. Die von der Vermittlungsstelle empfangenen Antwort-Nachrichten können beispielsweise hexadezimal, numerisch oder mittels eines Analyseprogramms in verschiedenen anderen Darstellungsarten ausgegeben werden.

Der Nachteil eines Testverfahrens mit solch einer Testeinrichtung ist, daß die Erstellung eines Test-Falls sehr zeitaufwendig ist, da die Programmierung eines Test-Falls aufwendig ist und für die Programmierung meist mehrere verschiedene Hilfs-Programme benötigt werden. Auch die Auswertung des Testergebnisses benötigt sehr viel Zeit.

Die Aufgabe der Erfindung ist es nun, die für das Testen einer Einrichtung benötigte Zeit zu verringern.

Die Aufgabe wird gelöst durch ein Verfahren nach der Lehre von Anspruch 1, durch eine Konvertereinrichtung nach der Lehre von Anspruch 9 sowie durch eine Testeinrichtung nach der Lehre von Anspruch 11.

Der Grundgedanke der Erfindung ist, daß mittels Grundeinstellungs-Daten und Nachrichtenstruktur-Daten ein abstraktes Test-Szenario und ein Test-Fall, der den Testablauf steuert, wechselseitig aufeinander abgebildet werden. Durch die Verknüpfung dieser Daten mit dem Test-Szenario wird hierbei eine Art variable Filterfunktion aufgebaut, die es dem Tester ermöglicht, seinen Testwunsch auf die notwendigen Informationen reduziert einzugeben und das Ergebnis des Testablaufes in derselben Form wieder zu erhalten. Damit wird es möglich, einen Test-Fall schneller und mit nur einem Hilfs-Programm zu erstellen und das Test-Ergebnis schneller auszuwerten.

Vorteilhafte Ausgestaltungen der Erfindung sind den Unteransprüchen zu entnehmen.

Ein weiterer Vorteil der Erfindung ist, daß interaktives Testen möglich ist. Durch die jederzeit mögliche Abbildung des gerade ablaufenden Test-Falls auf das abstrakte Test-Szenario kann die augenblickliche Test-Situation erfaßt und durch Veränderung des Test-Szenarios sodann in den Test-Fall und damit in die Testablauf-Prozedur eingegriffen werden.

Noch ein Vorteil ist, daß durch die Abbildung weniger Fehler in den Test-Fällen enthalten sind und daß die noch enthaltenen Fehler schneller erkannt und beseitigt werden können.

Noch ein Vorteil ist, daß das abstrakte Test-Szenario unabhängig von der verwendeten Simulationseinrichtung ist. Damit kann der Tester einen Test unabhängig von der Form der Testablauf-Prozedur der verwendeten, speziellen Simulationseinrichtung erstellen und auswerten.

Im folgenden wird die Erfindung anhand eines Ausführungsbeispiels unter Zuhilfenahme bei liegender Zeichnungen weiter erläutert.
- Fig. 1: zeigt ein Blockschaltbild einer mit einer Netzkomponente verbundenen erfindungsgemäßen Testeinrichtung.
- Fig. 2: zeigt ein detailiertes Blockschaltbild der erfindungsgemäßen Testeinrichtung nach Fig. 1.
- Fig. 3: zeigt eine symbolische Darstellung einer Nachrichtenstruktur für die erfindungsgemäße Testeinrichtung nach Fig. 1 und Fig. 2.

Im Ausführungsbeispiel wird nun die Anwendung des erfindungsgemäßen Verfahrens in einer Testanordnung erläutert, die aus einer Netzkomponente für ein Mobilfunknetz und einer erfindungsgemäßen Testeinrichtung besteht, die eine erfindungsgemäße Konvertereinrichtung enthält. Die erfindungsgemäße Konvertereinrichtung wird hierbei von einem erfindungsgemäßen Programm-Modul gesteuert.

Eine Netzkomponente als Testobjekt ist hier nur beispielhaft gewählt. Es könnte auch eine beliebige andere Einrichtung verwendet werden, die durch den Austausch von Nachrichten getestet werden kann.

Bei solchen Nachrichten handelt es sich dabei um Informationen, die einem oder mehreren Protokollen, insbesondere auch Schnittstellenprotokollen entsprechen. Es ist jedoch auch möglich, daß keine solchen Protokolle definiert sind. Entscheidend ist, daß der Empfang dieser Informationen vorbestimmte Reaktionen des Testobjekts auslöst, die sich dann direkt oder indirekt auf Antwort-Nachrichten des Testobjekts auswirken. So ist es durch Auswertung dieser Antwort-Nachrichten möglich, die korrekte Reaktion der Einrichtung zu überprüfen.

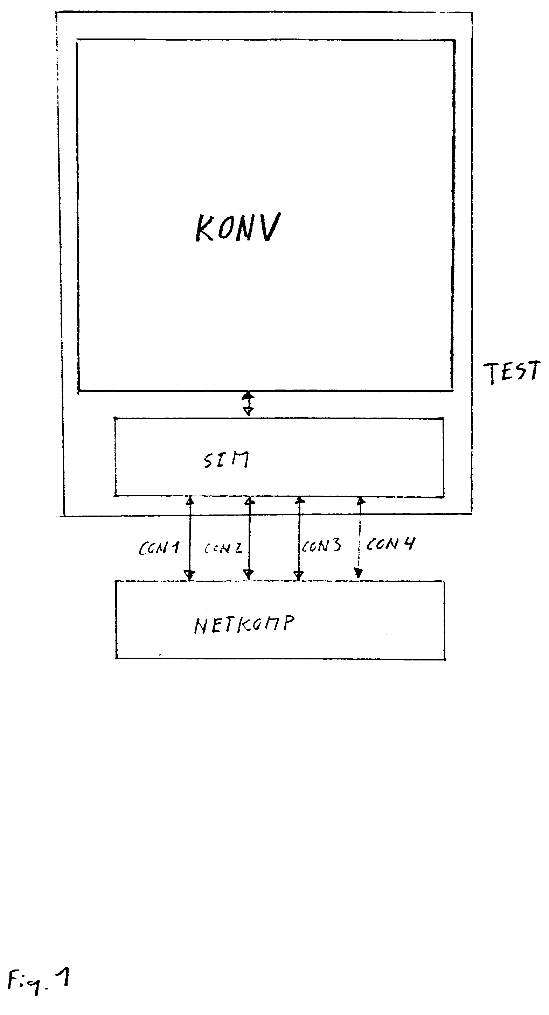

Fig. 1 zeigt eine Testeinrichtung TEST und eine Netzkomponente NETKOMP, die miteinander über vier Verbindungswege CON1 bis CON4 verbunden sind.

Bei der Netzkomponente NETKOMP handelt es sich um eine Netzkomponente für ein Mobilfunknetz, beispielsweise um eine Mobilfunkvermittlungsstelle (MSC: Mobile Switching Centre). Es könnte sich jedoch auch um eine beliebige andere Netzkomponente eines Kommunikationsnetzes handeln.

Bei der Testeinrichtung TEST handelt es sich um einen oder um mehrere miteinander verbundene Rechner, die mit entsprechenden peripheren Einrichtungen ausgestattet sind und von Programm-Modulen gesteuert werden. Solche Programm-Module bestehen aus einem oder mehreren Datenträgern, auf denen Steuerbefehle gespeichert sind. Datenträger sind hierbei beispielsweise Disketten, Festplatten, Speicherchips oder sonstige Speichermedien.

Jede der Verbindungswege CON1 bis CON4 ist mit einer Schnittstelle der Netzkomponente NETKOMP verbunden, die normalerweise für den Anschluß anderer Netzkomponenten dient. Solche Netzkomponenten wären hier beispielsweise Funkfeststation (Base Station : BS), Heimat-Datenbank (Home Location Register :HLR) oder Transitfunkvermittlungsstelle (Gateway Mobile Switching Centre : GMSC).

Es ist auch möglich, daß die Netzkomponente NETKOMP über eine andere Anzahl von Verbindungswegen mit der Testeinrichtung TEST verbunden ist. Dies hängt insbesondere von der Art der zu testenden Netzkomponente NETKOMP und der Ausstattung der Testeinrichtung TEST ab.

Die Testeinrichtung TEST sendet an die Netzkomponente NETKOMP über die Verbindungswege CON1 bis CON4 Nachrichten und empfängt als Antwort darauf Nachrichten von dieser. Die Testeinrichtung TEST simuliert hierdurch vier fiktive Netzkomponenten, die mit der Netzkomponente NETKOMP jeweils über den Verbindungsweg CON1, CON2, CON3 bzw. CON4 verbunden sind. Aus den Antworten-Nachrichten der Netzkomponente NETKOMP kann ermittelt werden, ob diese wie vorgesehen funktioniert.

Die Testeinrichtung TEST weist eine Konvertereinrichtung KONV und eine Simulationseinrichtung SIM auf. Die Simulationseinrichtung SIM tauscht mit der Netzkomponente NETKOMP und der Konvertereinrichtung KONV Daten aus.

Die Simulationseinrichtung SIM führt den Nachrichtenaustausch mit der Netzkomponente NETKOMP aus. Sie wird von einem Test-Fall gesteuert. Dieser Test-Fall enthält alle für den Ablauf eines Tests notwendigen Informationen in einer von der Simulationseinrichtung SIM ausführbaren Form. Solch ein Test-Fall besteht beispielsweise aus einer Anzahl von Programmen, die den Testablauf in Form eines Zustands-Automaten beschreiben. Der Fall umfaßt hierbei eine sehr große Informationsmenge, da er den gesammten, sich über mehrere Protokollebenen erstreckenden Kommunikationsablauf in allen Details beschreiben muß.

Es ist auch möglich, daß die Simulationseinrichtung SIM aus mehreren Unter-Simualtionseinrichtungen aufgebaut ist. Jede dieser Unter-Simulationseinrichtungen würde einen Unter-Test-Fall enthalten und eine oder mehrere Netzkomponenten für die Netzkomponente NETKOMP simulieren.

Mit der Konvertereinrichtung KONV wird der Test-Fall aus einem abstrakten Test-Szenario erstellt und die Antwort-Nachrichten wiederum auf das abstrakte Test-Szenario abgebildet. Das abstrakte Test-Szenario beschreibt hierbei den Test auf einer abstrakten Ebene, auf der nur die für den Test spezifischen Informationen gegeben sind und umfaßt so nur eine geringe Informationsmenge. Die Informationen, die für die Erstellung des Testfalles und für die Abbildung auf das abstrakte Szenario einzufügen bzw. auszufiltern sind, werden von der Konvertereinrichtung eingefügt bzw. ausgefiltert.

Der Test wird so vom Tester als abstraktes Test-Szenario erstellt, von der Konvertereinrichtung KONV auf den Test-Fall abgebildet und läuft sodann auf der Simulationseinrichtung SIM ab. Die Reaktion der Netzkomponente wird auf das Test-Szenario rückabgebildet. Damit ist es dem Tester möglich, ein testspezifisches Fehlverhalten der Netzkomponente sofort zu erkennen.

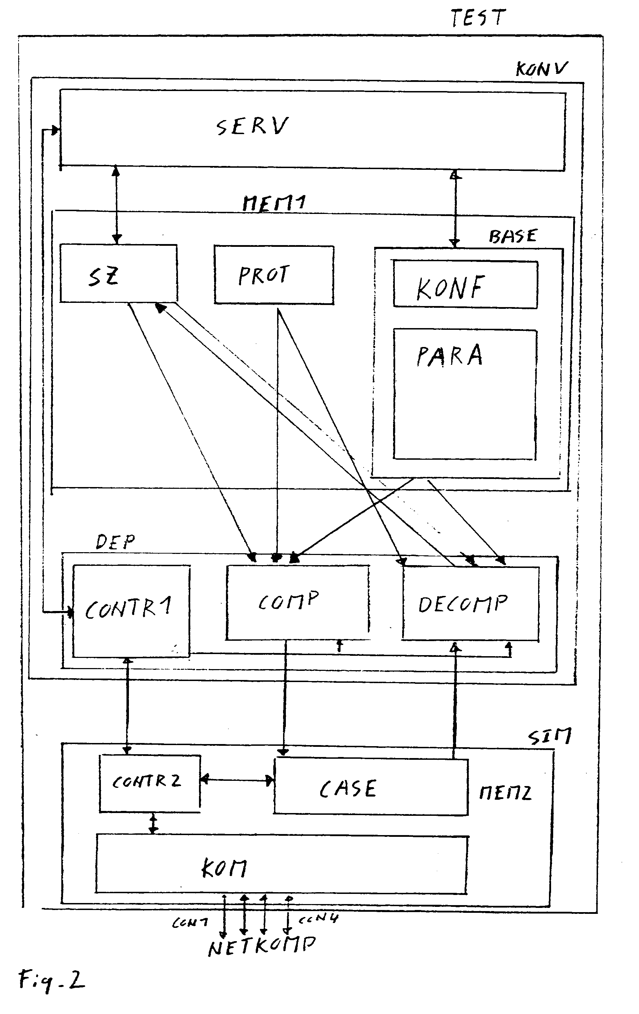

Der genaue Aufbau der Testeinrichtung TEST wird nun anhand von Fig. 2 näher erläutert.

Fig. 2 zeigt die Testeinrichtung TEST, die die Konvertereinrichtung KONV und die Simulationseinrichtung SIM aufweist.

Die Simulationseinrichtung SIM tauscht Daten mit der Konvertereinrichtung KONV und mit der Netzkomponente NETKOMP aus.

Die Simulationseinrichtung SIM weist eine Steuereinrichtung CONTR2, eine Speichereinrichtung MEM2 und eine Kommunikationseinrichtung KOM auf. Die Steuereinrichtung CONTR2 tauscht Daten mit der Konvertereinrichtung KONV, mit der Speichereinrichtung MEM2 und mit der Kommunikationseinrichtung KOM aus. Die Kommunikationseinrichtung KOM tauscht Nachrichten mit der Netzkomponente NETKOMP über die Verbindungswege CON1 bis CON4 aus.

Die Kommunikationseinrichtung KOM stellt die für den Nachrichtenaustausch mit der Netzkomponente NETKOMP notwendigen Kommunikationsdienste bereit. Solche Kommunikationsdienste sind beispielsweise die Bereitstellung der physikalischen Schnittstellen und die Bearbeitung der entsprechenden Schnittstellenprotokolle für die Verbindungswege CON1 bis CON4.

Es ist dabei möglich, daß die Kommunikationseinrichtung KOM über eine beliebige Anzahl von Einrichtungen verfügt, die solche Dienste für unterschiedliche Schnittstellen zur Verfügung stellen. Solche Einrichtungen könnten auch in modularer Form ausgetauscht werden.

Die Speichereinrichtung MEM2 enthält einen Datensatz CASE, der den Test-Fall beinhaltet. Desweiteren werden die von der Netzkomponenten NETKOMP erhaltenen Antwort-Nachrichten in dem Datensatz CASE abgespeichert.

Es ist auch möglich, daß der Datensatz CASE weitere Informationen enthält. Beispielsweise könnte darin vermerkt sein, welche Antwort-Nachrichten zu welchem Zustand der simulierenden Netzkomponente zu erwarten sind.

Die Steuereinrichtung CONTR2 steuert den Ablauf in der Simulationseinrichtung SIM. Sie sendet gemäß dem in dem Datensatz CASE abgelegten Test-Fall mittels der Kommunikationseinrichtung KOM an die Netzkomponente NETKOMP Nachrichten und simuliert so vier fiktive Netzkomponenten. Die Antwort-Nachrichten vermerkt sie sodann in dem Datensatz CASE. Darüberhinaus tauscht sie mit der Konvertereinrichtung KONV Steuerbefehle aus. Damit ist es der Konvertereinrichtung KONV möglich, auf den Ablauf in der Simulationseinrichtung SIM Einfluß zu nehmen.

Auf diesen Austausch von Steuerbefehlen zwischen der Steuereinrichtung CONTR2 und der Konvertereinrichtung KONV könnte auch verzichtet werden. Dies ist z.B. dann sinnvoll, wenn der Datenaustausch zwischen der Simulationseinrichtung SIM und der Konvertereinrichtung KONV nicht über eine Datenverbindung sondern über den Austausch von Datenträgern abgewickelt wird.

So ergibt sich folgender Funktionsablauf in der Simulationseinrichtung SIM:
Daten über einen Test-Fall werden von der Konvertereinrichtung KONV in den Datensatz CASE in der Speichereinrichtung MEM2 geladen. Die Steuereinrichtung CONTR2 sendet mittels der Kommunikationseinrichtung KOM Nachrichten entsprechend diesem Test-Fall an die Netzkomponente NETKOMP. Als Antwort darauf erhält sie Antwort-Nachrichten von der Netzkomponente NETKOMP, die sie in dem Datensatz CASE vermerkt. Wenn ein entsprechender Steuerbefehl von der Konvertereinrichtung KONV empfangen wird, oder wenn beispielsweise solche Antwort-Nachrichten nicht mit den in dem Datensatz CASE vermerkten Antwort-Nachrichten übereinstimmen veranlaßt die Steuereinrichtung CONTR2 das Senden des Datensatzes CASE an die Konvertereinrichtung KONV.

Es ist auch möglich, daß nur Teile des Datensatzes CASE an die Konvertereinrichtung KONV gesendet werden, beispielsweise nur die Antwort-Nachrichten der Netzkomponente NETKOMP.

Die Konvertereinrichtung KONV weist die Bedieneinrichtung SERV, die Speichereinrichtung MEM1 und die Abbildungseinrichtung DEP auf. Die Bedieneinrichtung SERV tauscht mit der Speichereinrichtung MEM1 und mit der Abbildungseinrichtung DEP Daten aus. Die Abbildungseinrichtung DEP tauscht mit der Speichereinrichtung MEM1 und mit der Simulationseinrichtung SIM Daten aus.

Die Speichereinrichtung MEM1 weist drei Datensätze SZ, PROT, und BASE auf.

Der Datensatz SZ beinhaltet das abstrakte Test-Szenario. Der Test wird hierbei durch das abstrakte Test-Szenario beispielsweise in der Form beschrieben, daß die zwischen der Netzkomponente NETKOMP und den zu simulierenden vier fiktiven Netzkomponenten für den Test auszutauschenden Nachrichten gegen die Zeitachse aufgetragen sind. Es sind dabei nur die Bezeichnungen der Nachrichten auf einer frei wählbaren Kommunikationsebene abgespeichert. Die große Anzahl von Parametern und Unter-Nachrichten oder Nachrichtensequenzen, die für die Umsetzung einer solchen abstrakten Nachricht notwendig sind, sind nicht aufgeführt. Wenn die spezielle Test-Situation auf solch einen Parameter oder eine solche Unter-Nachricht abzielt, kann diese noch zusätzlich bei der entsprechenden abstrakten Nachricht vermerkt sein.

Der Datensatz PROT enthält die Nachrichtenstruktur der von der Netzkomponente NETKOMP verwendeten Protokolle, insbesondere der Kommunikations-Protokolle. Es ist auch möglich, daß der Datensatz PROT die Nachrichtenstruktur weiterer Protokolle enthält, die nicht von der Netzkomponente NETKOMP verwendet werden. Dies ist insbesondere dann sinnvoll, wenn die Testeinrichtung TEST zum Testen verschiedener Netzkomponenten dient, die unterschiedliche Protokolle verwenden.

Der Datensatz BASE enthält zwei Dateien KONV und PARA.

Die Datei KONF enthält die Konfiguration, in der die Netzkomponente NETKOMP eingebunden ist. Die Konfiguration beschreibt hierbei beispielsweise, welche anderen Netzkomponenten mit der Netzkomponente NETKOMP verbunden sind, insbesondere auch, welche Netzkomponenten von der Testeinrichtung TEST simuliert werden.

Die Datei PARA enthält eine große Anzahl von Parametern, die die Netzkomponente NETKOMP, die von der Testeinrichtung TEST zu simulierenden Netzkomponenten und die Kommunikationsumgebung dieser Netzkomponenten beschreiben.

Die Bedieneinrichtung SERV stellt dem Benutzer der Testeinrichtung TEST mittels entsprechender Ein- und Ausgabeeinrichtungen eine graphische Benutzeroberfläche zur Verfügung, mit der er Daten aus den Datensätzen SZ und BASE der Speichereinrichtung MEM1 aus lesen oder in diese eintragen kann. Darüberhinaus ist es dem Benutzer der Testeinrichtung TEST möglich, mit der Bedieneinrichtung SERV Steuerbefehle an die Abbildungseinrichtung DEP zu senden oder Daten von dieser zu empfehlen.

Es ist auch möglich, daß die Bedieneinrichtung SERV nicht über die Fähigkeiten einer graphischen Benutzeroberfläche verfügt und nur einfache Ein- und Ausgabefunktionen zur Verfügung stellt. Darüberhinaus ist es möglich, daß von der Bedieneinrichtung SERV keine Steuerbefehle an die Abbildungseinrichtung DEP gegeben oder von dieser keine Daten empfangen werden können.

Es ist auch möglich, daß die Bedieneinrichtung SERV Daten in den Datensatz PROT eintragen oder aus diesem aus lesen kann. Insbesondere ist dabei möglich, daß Daten mittels einer speziellen Leseeinrichtung von Datenträgern, beispielsweise von Disketten oder Datenblättern in den Datensatz PROT eingetragen werden.

Die Abbildungseinrichtung DEP bildet die Datensätze SZ und CASE wechselseitig aufeinander ab. Sie weist eine Steuereinrichtung CONTR1 und zwei Übersetzungseinrichtungen COMP und DECOMP auf.

Die Steuereinrichtung CONTR1 tauscht mit der Bedieneinrichtung SERV und mit der Steuereinrichtung CONTR2 der Simulationseinrichtung SIM Daten aus und sendet Steuerbefehle an die Übersetzungseinrichtungen COMP und DECOMP. Die Übersetzungseinrichtung COMP empfängt Daten von den Datensätzen SZ, PROT und BASE der Speichereinrichtung MEM1 und sendet Daten an die Speichereinrichtung MEM2 der Simulationseinrichtung SIM. Die Übersetzungseinrichtung DECOMP liest aus den Datensätzen SZ, PROT und BASE Daten aus und trägt in den Datensatz SZ Daten ein. Darüberhinaus empfängt sie Daten von der Speichereinrichtung MEM2 der Simulationseinrichtung SIM.

Die Übersetzungseinrichtung COMP liest auf einen Steuerbefehl der Steuereinrichtung CONTR1 hin Daten über das abstrakte Test-Szenario aus dem Datensatz SZ ein. Diese Daten ergänzt sie mittels der in dem Datensatz PROT abgelegten Nachrichtenstrukturen mit Grundeinstellungs-Daten, die sie aus dem Datensatz BASE einliest. Die Grundeinstellungs-Daten liefern so die "Details" für das abstrakte Test-Szenario. Das auf diese Art erhaltene detailierte Test-Szenario wird sodann mittels weiterer Daten aus dem Datensatz BASE in eine Form übersetzt, die der von der Simulationseinrichtung SIM geforderten Form für einen Test-Fall entspricht. Der so erzeugte Test-Fall wird sodann an die Simulationseinrichtung SIM gesendet und dort in den Datensatz CASE in der Speichereinrichtung MEM2 eingetragen.

Es ist auch möglich, daß eine getrennte Einrichtung für die Übersetzung des detailierten Test-Szenarios in den Test-Fall vorgesehen ist. Insbesondere ist es möglich, daß verschiedene solche Einrichtungen vorhanden sind, die die Übersetzung in Test-Fälle für jeweils unterschiedliche Simulationseinrichtungen durchführen, die unterschiedliche Formen des Test-Falls fordern. Zwischen solchen Einrichtungen könnte auch umgeschaltet werden oder sie könnten modular austauschbar sein.

Die Übersetzungseinrichtung DECOMP führt auf ähnliche Weise die Rückabbildung durch. Auf einen Steuerbefehl der Steuereinrichtung CONTR1 liest sie den Datensatz CASE aus der Simulationseinrichtung SIM ein, erzeugt aus dem Datensatz CASE ein dem Testablauf entsprechendes detailiertes Test-Szenario und bildet dieses mittels Daten aus den Datensätzen SZ, PROT und BASE auf ein abstraktes Szenario ab. Dieses rückabgebildete, abstrakte Test-Szenario wird sodann in den Datensatz SZ eingetragen.

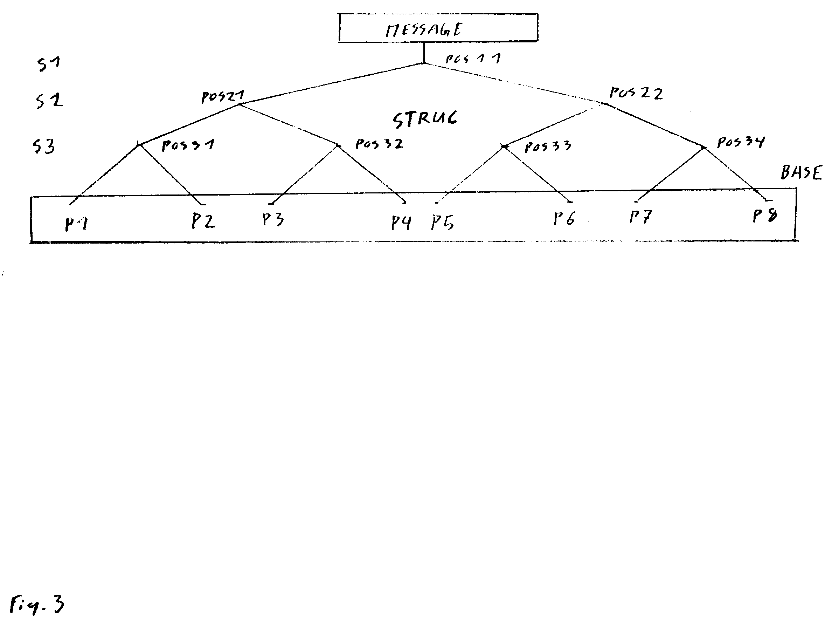

Ein mögliches Abbildungsverfahren, das von den Übersetzungseinrichtungen COMP und DECOMP durchgeführt wird, wird nun im folgenden anhand von Fig. 3 genauer erläutert.

Fig. 3 zeigt eine Nachrichtenstruktur STRUC, eine Nachricht MESSAGE und acht Parameter P1 bis P8, die in dem Datensatz BASE abgespeichert sind.

Bei der Nachricht MESSAGE handelt es sich um eine abstrakte Nachricht, die in dem in dem Datensatz SZ abgespeicherten Test-Szenario verwendet wird.

Die Nachrichtenstruktur STRUC ist baumförmig in drei Ebenen S1 bis S3 aufgebaut und ordnet der Nachricht MESSAGE die Parameter P1 bis P8 zu.

Die Nachrichtenstruktur weist mehrere Strukturpositionen POS11 bis POS34 auf, wobei die Strukturposition POS11 auf der ersten Ebene S1, die Strukturpositionen POS21 und POS22 auf der zweiten Ebene S2 und die Strukturpositionen POS31 bis POS34 auf der dritten Ebene S3 liegen. Den Strukturpositionen POS1 bis POS22 der oberen beiden Ebenen S1 und S2 sind jeweils Strukturpositionen der jeweiligen darunterliegenden Ebene und den Strukturpostionen POS31 bis POS34 der untersten Ebene S3 jeweils Parameter aus dem Datensatz BASE zugeordnet.

Jede der Strukturpositionen POS11 bis POS34 steht hierbei für eine abstrakte Nachricht oder einen abstrakten Parameter, wobei solche Nachrichten und Parameter, je nach der Ebene, der sie angehören, verschiedenen Abstraktionsebenen zugehören.

Es ist auch möglich, daß die Nachrichtenstruktur STRUC aus einer anderen Anzahl von Ebenen aufgebaut ist oder daß es sich nicht um eine baumförmige Struktur handelt.

Für die Abbildung des abstrakten auf das detailierte Test-Szenario werden die abstrakten Nachrichten auf Nachrichtenstrukturpositionen abgebildet. Die Nachricht MESSAGE wird so auf die Strukturposition POS11 abgebildet, wodurch ihr automatisch die Parameter P1 bis P8 zugeordnet werden. Eine andere abstrakte Nachricht könnte beispielsweise auf die Strukturposition POS21 abgebildet werden, wodurch ihr die Parameter P1 bis P4 zugeordnet würde.

Dadurch, daß im abstrakten Test-Szenario abstrakte Nachrichten oder auch Parameter verwendet werden können, die auf unterschiedlichen Stufen der entsprechenden Nachrichtenstruktur verweisen, kann das abstrakte Test-Szenario punktuell unterschiedlichen Abstraktionsebenen angehören. Damit ist es einem Tester möglich, das in dem Datensatz SZ abgespeicherte abstrakte Test-Szenario mittels der Bedieneinrichtung SERVE in punktuell wählbarer Abstraktionstiefe zu erstellen.

Bei der Rückabbildung des detailierten Test-Szenarios auf das abstrakte Test-Szenario wird wie folgt vorgegangen:
Mittels des ursprünglichen abstrakten Test-Szenarios wird die Zuordnung von Gruppen von Parametern zu Strukturpositionen bestimmt. Ist die ursprüngliche Zuordnung nicht mehr möglich, weil beispielsweise von der Netzkomponente NETKOMP eine von der vorhergesagten Antwort-Nachricht abweichende Antwort-Nachricht gesendet wurde, so werden die abweichenden Strukturpositionen ermittelt. Damit erhält man eine Rückabbildung, bei der das abstrakte Test-Szenario nur dann in der Abstraktionstiefe von dem ursprünglichen Test-Szenario abweicht, wenn Unterschiede zwischen diesen bestehen.

Es ist auch möglich, Gruppen von Parametern immer Strukturpositionen derselben Ebene zuzuordnen und so ein abstraktes Test-Szenario mit einheitlicher Abstraktionshöhe zu erhalten.

Die Steuereinrichtung CONTR1 steuert nach Fig. 2 die Abbildung und die Rückabbildung durch die Übersetzungseinrichtung COMP bzw. DECOMP. Auf eine Anforderung aus der Bedieneinrichtung SERV hin sendet sie an die Übersetzungseinrichtung COMP und an die Steuereinrichtung CONTR2 der Simulationseinrichtung SIM Steuerbefehle, die eine Abbildung des Datensatzes SZ auf den Datensatz CASE auslösen. Auf eine andere Anforderung von der Bedieneinrichtung SERV hin sendet die Steuereinrichtung CONTR1 an die Übersetzungseinrichtung DECOMP und an die Steuereinrichtung CONTR2 der Simulationseinrichtung SIM Steuerbefehle, die eine Rückabbildung des Datensatzes CASE in den Datensatz SZ auslösen.

Damit ergibt sich folgende Funktionsweise der Konvertereinrichtung KONV:
Ein abstraktes Test-Szenarios wird über die graphische Benutzeroberfläche der Bedieneinrichtung SERV in dem Datensatz SZ erstellt und dort abgespeichert. Auf eine Anforderung hin sendet die Steuereinrichtung CONTR1 Steuerbefehle an die Übersetzungseinrichtung COMP, die sodann das abstrakte Test-Szenario aus dem Datensatz SZ mittels der Nachrichtenstruktur der zu verwendeten Kommunikationsprotokolle und der Grundeinstellung-Daten aus den Datensätzen PROT bzw. BASE in einen Test-Fall in der Sprache der Simulationseinrichtung SIM abbildet. Die Daten über diesen Test-Fall werden sodann an die Simulationseinrichtung SIM gesendet, wo sie in dem Datensatz CASE abgespeichert werden. Auf Anforderung über die Bedieneinrichtung SERV oder von der Steuereinrichtung CONTR2 wird die Rückabbildung ausgelöst. Die Daten aus dem Datensatz CASE werden an die Übersetzungseinrichtung DECOMP gesendet, die sodann die Rückabbildung mittels der Daten aus den Datensätzen SZ, PROT und BASE durchführt.

In dem Ausführungsbeispiel wird das Testen einer Netzkomponente beschrieben. Es ist weiter möglich, mit der Erfindung analog zum Ausführungsbeispiel das Zusammenspiel mehrerer Netzkomponenten zu testen, die alle mit einer erfindungsgemäßen Testeinrichtung verbunden sind.

## Patentansprüche

1. Verfahren zum Testen mindestens einer ersten Einrichtung (NETKOMP), bei dem die erste Einrichtung (NETKOMP) mit einer Simulationseinrichtung (SIM) verbunden wird, die gemäß einem in einem zweiten Datensatz (CASE) abgespeicherten Test-Fall mindestens eine zweite Einrichtung simuliert, und bei dem die Simulationseinrichtung (SIM) gemäß dem Test-Fall Nachrichten an die erste Einrichtung (NETKOMP) sendet, Antwort-Nachrichten von der ersten Einrichtung (NETKOMP) empfängt und im zweiten Datensatz abspeichert, **dadurch gekennzeichnet,** daß ein Test vorab als abstraktes Test-Szenario in einem ersten Datensatz (SZ) abgespeichert wird, daß zur Erzeugung des Test-Falls der erste Datensatz (SZ) auf den zweiten Datensatz (CASE) mittels Nachrichtenstruktur-Daten durch Einfügung von Grundeinstellungs-Daten abgebildet wird und daß zur Auswertung der zweite Datensatz (CASE) auf den ersten Datensatz (SZ) durch Datenreduktion rückabgebildet wird.

2. Verfahren nach Anspruch 1, dadurch gekennzeichnet, daß für die Abbildung des ersten Datensatzes (SZ) auf den zweiten Datensatz (CASE) das abstrakte Test-Szenario auf eine Vielzahl von Nachrichtenstruktur-Positionen (POS11 bis POS34) abgebildet wird und daß die diesen Nachrichtenstruktur-Positionen (POS11 bis POS34) zugeordneten Grundeinstellungs-Daten bestimmt werden.

3. Verfahren nach Anspruch 1, dadurch gekennzeichnet, daß für die Rückabbildung des zweiten Datensatzes (CASE) auf den ersten Datensatz (SZ) die Antwort-Nachrichten mittels des ursprünglichen Test-Szenarios auf Nachrichtenstruktur-Positionen (POS11 bis POS34) abgebildet werden.

4. Verfahren nach Anspruch 2 oder 3, dadurch gekennzeichnet, daß die Nachrichtenstruktur einer Baumstruktur entspricht.

5. Verfahren nach Anspruch 1, dadurch gekennzeichnet, daß das abstrakte Test-Szenario in punktuell wählbarer Abstraktionstiefe mittels einer Bedieneinrichtung (SERV) erstellt und im zweiten Datensatz (SZ) abgespeichert wird.

6. Verfahren nach Anspruch 1, dadurch gekennzeichnet, daß das abstrakte Test-Szenario in einer punktuell von dem ursprünglichen Test-Szenario abweichenden Abstraktionstiefe rückabgebildet wird, wenn Abweichungen zwischen dem ursprünglichen und dem sich in der Rückabbildung befindenden Test-Szenario erkannt werden.

7. Verfahren nach Anspruch 1, dadurch gekennzeichnet, daß der zweite Datensatz (CASE) auf Anforderung in den ersten Datensatz (SZ) rückabgebildet wird.

8. Verfahren nach Anspruch 1, dadurch gekennzeichnet, daß der zweite Datensatz (CASE) aufgrund von von der ersten Einrichtung (NETKOMP) empfangenen Antwort-Nachrichten auf den ersten Datensatz (SZ) rückabgebildet wird.

9. Konvertereinrichtung (KONV) für das Testen von mindestens einer ersten Einrichtung (NETKOMP) mittels einer Simulationseinrichtung (SIM), die so ausgestaltet ist, daß sie mindestens eine zweite Einrichtung gemäß eines in einem zweiten Datensatz (CASE) abgespeicherten Test-Falls simuliert, **dadurch gekennzeichnet,** daß die Konvertereinrichtung (KONV) mit einer Speichereinrichtung (MEM1), mit einer Abbildungseinrichtung (DEP) und mit einer Bedieneinrichtung (SERV) zur Ein- und Ausgabe von Daten aus der Speichereinrichtung (MEM1) versehen ist, daß die Speichereinrichtung (MEM1) einen ersten Datensatz (SZ) über ein abstraktes Test-Szenario, einen Grundeinstellungs-Datensatz (BASE) und einen Nachrichtenstruktur-Datensatz (PROT) enthält und daß die Abbildungseinrichtung (DEP) so ausgestaltet ist, daß sie auf einen ersten Steuerbefehl den ersten Datensatz (SZ) auf den zweiten Datensatz (CASE) mittels Daten aus dem Nachrichtenstruktur-Datensatz (PROT) durch Einfügung von Daten aus dem Grundeinstellungs-Datensatz (BASE) abbildet und daß sie auf einen zweiten Steuerbefehl den zweiten Datensatz (CASE) auf den ersten Datensatz (SZ) durch Datenreduktion rückabbildet.

10. Konvertereinrichtung (KONV) nach Anspruch 9, dadurch gekennzeichnet, daß die Abbildungseinrichtung (DEP) Mittel für den Anschluß unterschiedlicher Simulationseinrichtungen (SIM) enthält.

11. Testeinrichtung (TEST) zum Testen von mindestens einer ersten mit der Testeinrichtung verbundenen Einrichtung (NETKOMP), wobei die Testeinrichtung (TEST) mit einer Simulationseinrichtung (SIM) versehen ist, die so ausgestaltet ist, daß sie mindestens eine zweite Einrichtung gemäß eines in einem zweiten Datensatz (CASE) abgespeicherten Test-Falls simuliert, **dadurch gekennzeichnet,** daß die Testeinrichtung (TEST) mit einer Konvertereinrichtung (KONV) versehen ist, die mit einer Speichereinrichtung (MEM1), mit einer Abbildungseinrichtung (DEP) und einer Bedieneinrichtung (SERV) zur Ein- und Ausgabe von Daten aus der Speichereinrichtung (MEM1) versehen ist, daß die Speichereinrichtung (MEM1) einen zweiten Datensatz (CASE) über ein abstraktes Test-Szenario, einen Grundeinstellungs-Datensatz (BASE) und einen Nachrichtenstruktur-Datensatz (PROT) enthält und daß die Abbildungseinrichtung (DEP) so ausgestaltet ist, daß sie auf einen ersten Steuerbefehl den ersten Datensatz (SZ) auf den zweiten Datensatz (CASE) mittels Daten aus dem Nachrichtenstruktur-Datensatz (PROT) durch Einfügung von Daten aus dem Grundeinstellungs-Datensatz (BASE) abbildet und daß sie auf einen zweiten Steuerbefehl den zweiten Datensatz (CASE) auf den ersten Datensatz (SZ) durch Datenreduktion rückabbildet.

12. Testeinrichtung (TEST) nach Anspruch 11, dadurch gekennzeichnet, daß die Testeinrichtung (TEST) über eine Vielzahl von Verbindungswegen (CON1 bis CON4) mit der ersten Einrichtung (NETKOMP) verbunden ist, und daß die Simulationseinrichtung (SIM) so ausgestaltet ist, daß sie pro Verbindungsweg (CON1 bis CON4) eine zweite Einrichtung simuliert.

13. Programm-Modul für eine Konvertereinrichtung (KONV) zum Testen mindestens einer ersten Einrichtung (NETKOMP) mittels einer Simulationseinrichtung (SIM), die so ausgestaltet ist, daß sie mindestens eine zweite Einrichtung gemäß eines in einem zweiten Datensatz (CASE) abgespeicherten Test-Fall simuliert, wobei das Programm-Modul eine Vielzahl von Steuerbefehlen enthält, **dadurch gekennzeichnet,** daß die Steuerbefehle so angeordnet sind, daß sie bei ihrer Ausführung den Ablauf in der Konvertereinrichtung (KONV) derart steuern, daß aufgrund einer ersten Anforderung ein erster Datensatz (SZ), in dem ein Test als abstraktes Test-Szenario abgespeichert ist, auf den zweiten Datensatz (CASE) mittels Nachrichtenstruktur-Daten durch Einfügen von Grundeinstellungs-Daten abgebildet wird und daß auf eine zweite Anforderung der zweite Datensatz (CASE) auf den ersten Datensatz (SZ) durch Datenreduktion rückabgebildet wird.
